# EUROPEAN PATENT APPLICATION

(11) **EP 3 826 155 A1**
(43) Date of publication of application: **26.05.2021**
(21) Application number: 20208652.6
(22) Date of filing: 19.11.2020
(51) Int. Cl.: H02K 99/00, H02K 33/16, H02K 33/18

(54) **ELECTRIC MOTOR**

(30) Priority: 20.11.2019 NL 2024269
(71) Applicant: Keetman, Arie, 1701 GN Heerhugowaard (NL)
(72) Inventor: Keetman, Arie, 1701 GN Heerhugowaard (NL)
(74) Representative: 't Jong, Bastiaan Jacob

(57) **Abstract**

The invention relates to an electric motor, comprising:
- a shaft for driving;
- at least one drive element arranged on the shaft for driving, which at least one drive element comprises a first and a second pair of an electrical coil and a permanent magnet, wherein the electrical coil and permanent magnet are arranged coaxially and are displaceable in axial direction relative to each other by energizing of the relevant electrical coil;
wherein the at least one drive element has a longitudinal axis, wherein the longitudinal axis extends radially of the shaft for driving, the axial direction of the two pairs coincides with this longitudinal axis and the first and second pair are arranged on opposite sides of the shaft for driving; and
- a control for energizing the two electrical coils of each drive element on the basis of the angular position of the shaft for driving.

## Description

The invention relates to an electric motor.

Diverse types of electric motor are known in the prior art, including electric motors with a displaceable mass, as described in FR 2932621.

Described in this publication is an electric motor, wherein arranged on a shaft for driving is a tube in which a permanent magnet can be shifted reciprocally. Provided at both outer ends of the tube are electrical coils which can propel the permanent magnet reciprocally in the tube. The permanent magnet can further be fixed in an outer end of the tube.

By suitably controlling the electrical coils it is possible to obtain a displacement of the centre of mass such that the shaft for driving is rotated.

A drawback of the electric motor described in FR 2932621 is that the permanent magnet must be displaced over the whole length of the tube and is free to move between the two outer ends. When the shaft for driving has a certain resistance and is therefore too inert to gain speed, it is possible that the permanent magnet drops back to the position from where the permanent magnet was driven away. The centre of mass hereby does not change, and the shaft will not begin to rotate.

It is now an object of the invention to reduce or even obviate the above stated drawbacks.

This object is achieved according to the invention with an electric motor comprising:
- a shaft for driving;
- at least one drive element arranged on the shaft for driving, which at least one drive element comprises a first and a second pair of an electrical coil and a permanent magnet, wherein the electrical coil and permanent magnet are arranged coaxially and are displaceable in axial direction relative to each other by energizing of the relevant electrical coil;
wherein the at least one drive element has a longitudinal axis, wherein the longitudinal axis extends radially of the shaft for driving, the axial direction of the two pairs coincides with this longitudinal axis and the first and second pair are arranged on opposite sides of the shaft for driving; and
- a control for energizing the two electrical coils of each drive element on the basis of the angular position of the shaft for driving.

According to the invention, a pair of an electrical coil and a permanent magnet, which are displaceable relative to each other, which are displaceable relative to each other, is provided on either side of the shaft for driving. This relative displacement provides for a change of the centre of mass, whereby the shaft for driving can be rotated.

The electrical coils can now according to the invention have a fixed position relative to the shaft for driving and the permanent magnets shift, or the permanent magnets have a fixed position relative to the shaft and the electrical coils shift.

An advantage of the invention is that no mass need be displaced beyond the shaft for driving, but the mass is only moved closer to and further away from the shaft for driving by the relative displacement of the electrical coil and the permanent magnet.

The control provides for a synchronized energizing of the electrical coils, whereby the centre of mass is positioned such that a moment is exerted on the shaft for driving, whereby the shaft will begin to rotate.

A further advantage is that each drive element is symmetrical relative to the shaft, so that after a half-revolution the electrical coils can be energized in the same way so as to bring about the next stroke in the electric motor and obtain a subsequent half-revolution.

In addition, the mass of the drive elements contributes to the flywheel effect, whereby external forces will have little effect on the speed of revolution of the electric motor according to the invention.

In an embodiment of the electric motor according to the invention, of the at least one drive element the two electrical coils of a pair are arranged fixedly on each other and the two permanent magnets of a pair are arranged fixedly on each other.

Because the electrical coils are arranged on each other and the permanent magnets are arranged on each other, the relative movement of each pair will be synchronous.

This ensures that the moving element, for instance the permanent magnet, will be co-displaced by the other moving element inside the drive element.

In a preferred embodiment of the electric motor according to the invention one of the electrical coils and the permanent magnets are arranged fixedly on the shaft for driving, and the other of the electrical coils and the permanent magnets can shift in radial direction relative to the shaft for driving.

If the electrical coils are arranged fixedly on the shaft for driving, wiring of the electrical coils can be less complicated.

In a further preferred embodiment of the electric motor according to the invention the at least one drive element is provided at both ends of the longitudinal axis with shock absorbers for damping the relative movement between the electrical coil and the permanent magnet of each pair of the at least one drive element.

When an electrical coil is energized, a relative acceleration of the corresponding permanent magnet will be obtained in that the permanent magnet for instance moves relative to the shaft. When the permanent magnet reaches the end of the longitudinal axis of the drive element, the permanent magnet will bump against the end and generate a force, and thereby generate vibration. Such vibrations are reduced by arranging a shock absorber.

In a particular embodiment the shock absorbers are formed by springs, which decelerate the relative movement of electrical coil and permanent magnet and thus prevent a severe vibration.

This springs can store excess kinetic energy of the moving part of the electrical coil and permanent magnet, and the springs can also be compressed further by the centrifugal force, and released again during the subsequent stroke, whereby the power consumption can be reduced.

According to another embodiment of the electric motor according to the invention, the control comprises a distributor with a rotor arranged on the shaft for driving, with arranged along the periphery of the rotor contacts which are each electrically connected to an electrical coil of the at least one drive element, and two counter-contacts are arranged in stationary and diametrical manner along the periphery of the rotor.

The distributor here connects a power source to an electrical coil, subject to the angular position of the shaft for driving. The energizing of electrical coils can thus be adjusted in simple manner to the angular position of the shaft for driving.

Owing to the symmetrical construction of the electric motor, the direction of current can moreover always remain the same and, when contact is made between the two counter-contacts and two of the contacts arranged on the rotor, the relevant coil will in each case exert a repulsive and attractive force on the corresponding permanent magnet.

The two counter-contacts placed diametrically opposite each other are thus rotated 180° relative to each other.

The angular position of the counter-contact arranged along the periphery of the rotor can preferably be adjusted for accelerating and decelerating the electric motor.

The timing of the energizing of the electrical coils can be adjusted by so-called advancing or delaying of the distributor, and the speed of the shaft for driving can thus be adjusted or the torque on the shaft for driving can be adjusted.

A gas pedal can for instance be coupled to the counter-contacts in simple manner, whereby a user can make the electric motor accelerate or decelerate in simple manner.

When the rotation direction of the electric motor must be reversed, only the direction of current of the energizing of the coils need be adjusted. This can be achieved in simple manner by placing a suitable switch between the power source and the contacts. In addition, an optional gas pedal will have to make the counter-contacts rotate in opposite direction relative to the rotation direction during normal operation.

In a further preferred embodiment of the electric motor according to the invention at least two drive elements arranged on the shaft for driving are provided, wherein the at least two drive elements are arranged rotated relative to each other, preferably distributed uniformly over the periphery of the shaft.

When there are two drive elements, the angle between the drive elements is preferably 90 degrees, while the angle is 60 degrees when there are three drive elements. A uniform distribution is thus obtained for a determined number of drive elements, whereby a uniform drive of the shaft for driving is also obtained.

These and other features of the invention will be further elucidated with reference to the accompanying figures.
Figure 1 shows schematically a perspective view of a first embodiment of an electric motor according to the invention.
Figure 2 shows schematically a cross-section of a drive element of the electric motor of figure 1.
Figures 3A-3E show a schematic cross-section of the electric motor according to figure 1 in diverse positions.
Figure 4 shows a schematic cross-section of a second embodiment of a drive element for an electric motor according to the invention.

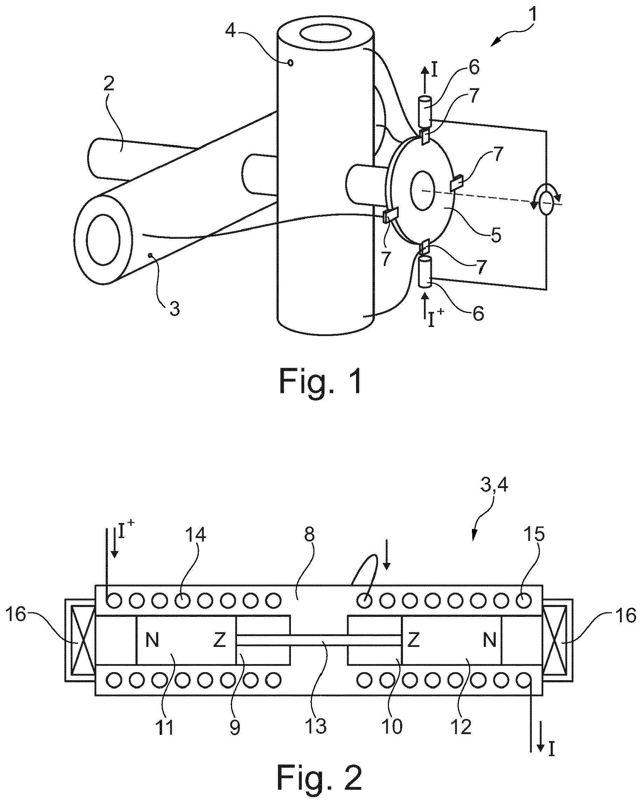

Figure 1 shows schematically an electric motor 1 according to the invention in perspective view. Electric motor 1 has a shaft 2 for driving, on which two drive elements 3, 4 are arranged. Drive elements 3, 4 are arranged at an angle of 90° relative to each other.

A distributor 5, 6 is arranged on the outer end of the shaft 2 for driving. The distributor has a rotor 5 on which are arranged contacts 7 which are connected to the electrical coils in the drive elements 3, 4 (see also figure 2 and further). The distributor further has two counter-contacts 6 which are placed along the periphery of rotor 5 and opposite each other, and connect to contacts 7 in order to thus energize the electrical coils.

The two counter-contacts 6 are mechanically connected to each other (shown schematically in figure 1) and rotatable around the shaft 2, whereby energizing of the electrical coils in drive elements 3, 4 can be advanced or delayed in order to thus accelerate or decelerate electric motor 1.

Figure 2 shows a cross-sectional view of a drive element 3, 4. Drive element 3, 4 has an elongate housing 8 with two spaces 9, 10 at either end, in each of which a permanent magnet 11, 12 can be shifted reciprocally. The two permanent magnets 11, 12 are mutually coupled by a coupling rod 13.

Two electrical coils 14, 15, each forming a pair together with the respective permanent magnets 11, 12, are incorporated in the elongate housing 8. The two electrical coils 14, 15 are connected in series and the free outer ends of the coils 14, 15 are connected to the contacts 7 on rotor 5.

By energizing an electrical coil 14, 15 of a pair the corresponding permanent magnet 11, 12 can be attracted or repelled.

Further provided at each outer end of elongate housing 8 is a spring 16 which damps the movement of the permanent magnets 11, 12 close to the outer ends of housing 8 by converting the kinetic energy into spring energy, and thus reduces vibrations. In addition, springs 16 are compressed further by the centrifugal force, which aids in the return movement of permanent magnets 11, 12.

Because the magnets 11, 12 are arranged mirror-symmetrically relative to shaft 2, i.e. in this embodiment the south poles of the two magnets 11, 12 are directed toward each other, and because the electrical coils 14, 15 have the same winding direction, the drive element 3, 4 will have the same configuration again with every half-revolution, whereby the coils 14, 15 can be powered once again, and a subsequent half-revolution can be achieved, in the same way.

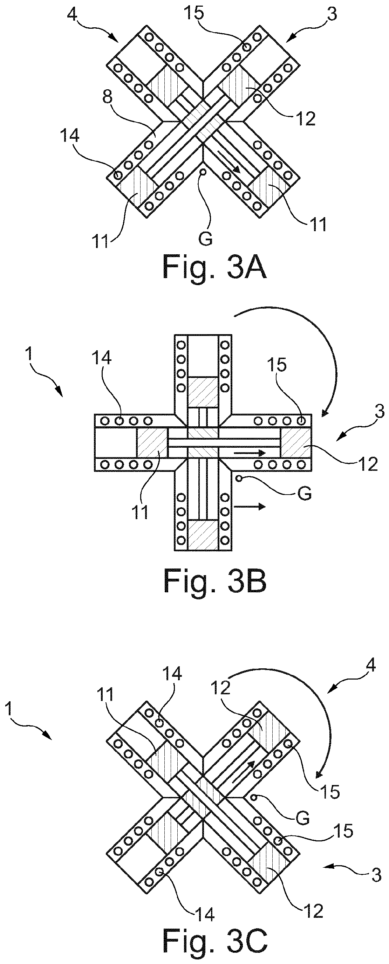

Figures 3A-3E show a schematic cross-section of the electric motor 1 in diverse positions.

In figure 3A electric motor 1 is shown in a rest position. Permanent magnet 11 of drive element 3 has here moved to the outer end of housing 8 and permanent magnet 11 of drive element 4 has likewise moved to the outer end of the housing 8 in question. Both permanent magnets 11 lie here below the shaft for driving, as seen in the direction of the force of gravity. The centre of mass G therefore lies below the shaft for driving.

In figure 3B the electrical coils 14 and 15 are energized such that permanent magnet 11 is repelled and permanent magnet 12 is attracted, whereby permanent magnet 12 now moves to the outer end of housing 8. As a result, the centre of mass G moves to the right in the drawing, whereby a moment is exerted on the shaft for driving and the shaft for driving with the drive elements 3, 4 begins to rotate.

As shown in figure 3C, after some rotation the electrical coils 14, 15 of drive element 4 are energized, whereby the permanent magnets of drive element 4 move and the centre of mass G shifts once again and the shaft for driving is given an impulse again.

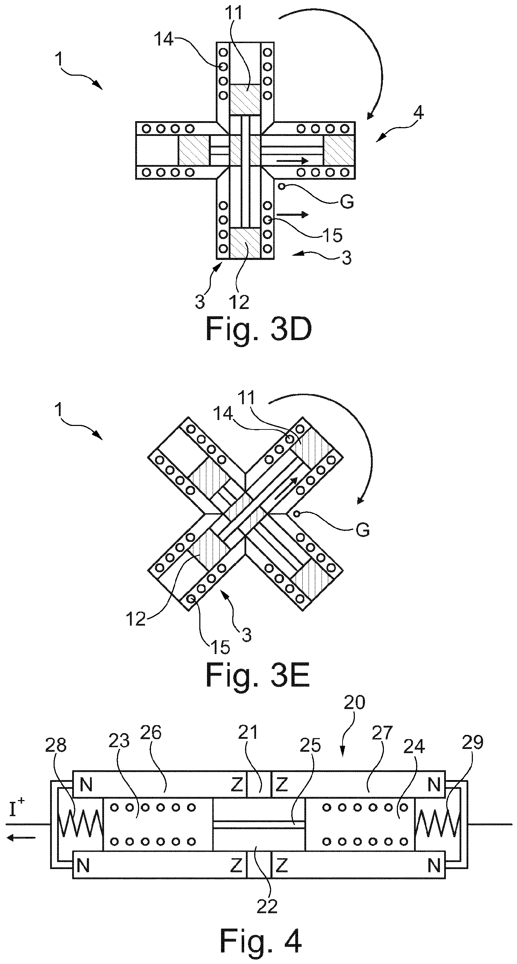

As shown in figures 3D and 3E, the electrical coils 14, 15 of drive element 3 are energized in opposite manner now that drive elements 3 have rotated 180° relative to the position shown in figure 3A, whereby the permanent magnet 11 returns to the outer end of the housing again.

As mentioned above, energizing of the diverse coils is done by distributor 5, 6, and this ensures that the shaft 2 for driving is driven.

Figure 4 shows a schematic cross-section of a second embodiment of a drive element 20 for an electric motor according to the invention. Drive element 20 has a housing 21 with a space 22 in which two coils 23, 24 move reciprocally. Coils 23, 24 are mutually connected in series by a coupling rod 25.

Arranged in housing 21 are permanent magnets 26, 27 which form a pair with the respective electrical coils 23, 24. These permanent magnets 26, 27 are placed uniformly around the periphery of the respective electrical coils 23, 24 whereby, according to applicant, a uniform attractive force is exerted and the relevant electrical coil will more or less float. In addition, the south poles of the permanent magnets 26, 27 will be directed toward each other, whereby a mirror-symmetrical arrangement of drive element 20 is obtained.

Provided at the outer ends of housing 21 are springs 28, 29 which are coupled to the respective electrical coils 23, 24. These springs 28, 29 provide for a damping of the movement of electrical coils 23, 24 and function as electrical connection for energizing these coils 23, 24. In addition, these springs 28, 29 are compressed as a result of centrifugal force, whereby the electrical coils 23, 24 are given an additional push during the return movement.

## Claims

1. Electric motor, comprising:
- a shaft for driving;
- at least one drive element arranged on the shaft for driving, which at least one drive element comprises a first and a second pair of an electrical coil and a permanent magnet, wherein the electrical coil and permanent magnet are arranged coaxially and are displaceable in axial direction relative to each other by energizing of the relevant electrical coil;
wherein the at least one drive element has a longitudinal axis, wherein the longitudinal axis extends radially of the shaft for driving, the axial direction of the two pairs coincides with this longitudinal axis and the first and second pair are arranged on opposite sides of the shaft for driving; and
- a control for energizing the two electrical coils of each drive element on the basis of the angular position of the shaft for driving.

2. Electric motor according to claim 1, wherein, of the at least one drive element the two electrical coils of a pair are arranged fixedly on each other and wherein the two permanent magnets of a pair are arranged fixedly on each other.

3. Electric motor according to claim 2, wherein one of the electrical coils and the permanent magnets are arranged fixedly on the shaft for driving and wherein the other of the electrical coils and the permanent magnets can shift in radial direction relative to the shaft for driving.

4. Electric motor according to any one of the foregoing claims, wherein the at least one drive element is provided at both ends of the longitudinal axis with shock absorbers for damping the relative movement between the electrical coil and the permanent magnet of each pair of the at least one drive element.

5. Electric motor according to any one of the foregoing claims, wherein the control comprises a distributor with a rotor arranged on the shaft for driving, with arranged along the periphery of the rotor contacts which are each electrically connected to an electrical coil of the at least one drive element, and two counter-contacts are arranged in stationary and diametrical manner along the periphery of the rotor.

6. Electric motor according to claim 5, wherein the angular position of the counter-contact arranged along the periphery of the rotor can be adjusted for accelerating and decelerating the electric motor.

7. Electric motor according to any one of the foregoing claims, wherein at least two drive elements arranged on the shaft for driving are provided and wherein the at least two drive elements are arranged rotated relative to each other, preferably distributed uniformly over the periphery of the shaft.
